# EUROPEAN PATENT SPECIFICATION

(11) **EP 2 677 491 B1**
(45) Date of publication and mention of the grant of the patent: **08.08.2018**
(21) Application number: 12172663.2
(22) Date of filing: 20.06.2012
(51) Int. Cl.: G06T 1/60

(54) **Method, system and apparatus for loading image data stored in a first memory into a second memory**
Verfahren, System und Vorrichtung zum Laden von Bilddaten, die von einem ersten Speicher in einen zweiten Speicher gespeichert werden
Procédé, système et appareil pour charger des données images stockées dans une première mémoire vers une seconde mémoire

(43) Date of publication of application: 25.12.2013
(73) Proprietor: Agfa Healthcare, 2640 Mortsel (BE)
(72) Inventor: Reingruber, Harald, 2640 Mortsel (BE); Mroz, Lukas, 2640 Mortsel (BE); Mlejnek, Matej, 2640 Mortsel (BE); Wegenkittl, Rainer, 2640 Mortsel (BE)

(56) References cited:
- US-B1- 6 587 588
- US-B1- 7 965 290
- CHRIS HARRISON ET AL: "Evaluation of progressive image loading schemes", PROCEEDINGS OF THE 28TH INTERNATIONAL CONFERENCE ON HUMAN FACTORS IN COMPUTING SYSTEMS,, 1 January 2010 (2010-01-01), pages 1549-1552, XP009163621,
- PARMELEE R P ET AL: "VIRTUAL STORAGE AND VIRTUAL MACHINE CONCEPTS", IBM SYSTEMS JOURNAL, IBM CORP. ARMONK, NEW YORK, US, vol. 11, no. 2, 1 January 1972 (1972-01-01), pages 99-131, XP009071709,
- ELNAHAS S E ET AL: "PROGRESSIVE CODING AND TRANSMISSION OF DIGITAL DIAGNOSTIC PICTURES", IEEE TRANSACTIONS ON MEDICAL IMAGING, IEEE SERVICE CENTER, PISCATAWAY, NJ, US, vol. 5, no. 2, 1 June 1986 (1986-06-01), pages 73-83, XP002067594,
- TZOU K-H: "PROGRESSIVE IMAGE TRANSMISSION: A REVIEW AND COMPARISON OF TECHNIQUES", OPTICAL ENGINEERING, SOC. OF PHOTO-OPTICAL INSTRUMENTATION ENGINEERS, BELLINGHAM, vol. 26, no. 7, 1 July 1987 (1987-07-01), pages 581-589, XP002065700,
- CHEE Y-K: "SURVEY OF PROGRESSIVE IMAGE TRANSMISSION METHODS", INTERNATIONAL JOURNAL OF IMAGING SYSTEMS AND TECHNOLOGY, WILEY AND SONS, NEW YORK, US, vol. 10, no. 1, 1 January 1999 (1999-01-01), pages 3-19, XP000805935,
- MICHAEL S V TURNER: "Progressive image transmission and reconstruction", SPIE PROCEEDINGS, THE INTERNATIONAL SOCIETY FOR OPTICAL ENGINEERING - SPIE, BELLINGHAM, WASHINGTON, USA, vol. 1657, 19 May 1992 (1992-05-19), pages 36-45, XP009163620,
- RANDELL B ET AL: "Dynamic Storage Allocation Systems", COMMUNICATIONS OF THE ACM, ASSOCIATION FOR COMPUTING MACHINERY, INC, UNITED STATES, vol. 11, no. 5, 1 May 1968 (1968-05-01), pages 297-306, XP002726281, ISSN: 0001-0782
- JOHN FOTHERINGHAM: "Dynamic Storage Allocation in the Atlas Computer Including an Automatic Use of a Backing Store", COMMUNICATIONS OF THE ACM, ASSOCIATION FOR COMPUTING MACHINERY, INC, UNITED STATES, vol. 4, no. 10, 1 October 1961 (1961-10-01), pages 435-436, XP002717754, ISSN: 0001-0782, DOI: 10.1145/366786.366800
- VAN DER VLEUTEN R J ET AL: "Flexible storage of images with application to digital cameras", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 2, 7 October 2001 (2001-10-07), pages 1097-1100, XP010563959, DOI: 10.1109/ICIP.2001.958689 ISBN: 978-0-7803-6725-8

## Description

The present invention relates to a method, system and an apparatus for loading image data stored in a first memory into a second memory according to the independent claims.

Loading 2D or 3D image data into a memory of an image data display unit is a challenge in applications where a fast display of preview images is required, in particular in the field of volume rendering of image data which is quite memory intensive. As network bandwidth is often the bottleneck, performant algorithms which handle the memory load efficiently are required.

US 7,965,290 B1 discloses a method for progressive loading of a 3D dataset, wherein spaced voxels of an original image are loaded into a contiguous sequence (called "Y column") of a column storage. C. Harrison et al., Evaluation of Progressive Image Loading Schemes, CHI 2010, April 10-15, 2010, Atlanta, Georgia, USA, relates to progressive volume loading schemes which are illustrated by a location of pixels in a display. US 6,587,588 B1 relates to a progressive image decoder for wavelet encoded images in compressed files by decoding incoming image data and updating an array of wavelet components and applying an inverse wavelet transform to the array of wavelet coefficients.

It is an object of the invention to provide a method, system and apparatus for loading image data stored in a first memory into a second memory requiring a reduced memory access and memory consumption during loading.

The object is achieved by the method, system and apparatus according to the independent claims.

In the method according to the invention at least a first set of sections of the image data is loaded into the second memory, wherein said sections of the image data are allocated to first original addresses in the first memory, wherein said sections of the image data stored in the first memory are spaced from one another, and said sections of the image data stored in the first memory are progressively loaded into the second memory and stored at first end addresses in the second memory, wherein said first end addresses of said sections stored in the second memory correspond to said first original addresses of said sections stored in the first memory.

The system according to the invention comprises a first memory for storing image data, a second memory for storing image data and a control unit for controlling and/or effecting loading of at least a first set of sections of the image data into the second memory, wherein said sections of the image data are allocated to first original addresses in the first memory, wherein said sections of the image data stored in the first memory are spaced from one another, and said sections of the image data stored in the first memory are progressively loaded into the second memory and stored at first end addresses in the second memory, wherein said first end addresses of said sections stored in the second memory correspond to said first original addresses of said sections stored in the first memory.

The apparatus according to the invention comprises a second memory for storing image data, an image data rendering unit for rendering image data stored in the second memory and a control unit for controlling and/or effecting loading of at least a first set of sections of image data stored in a first memory into the second memory, wherein said sections of the image data are allocated to first original addresses in the first memory, wherein said sections of the image data stored in the first memory are spaced from one another, and said sections of the image data stored in the first memory are progressively loaded into the second memory and stored at first end addresses in the second memory, wherein said first end addresses of said sections stored in the second memory correspond to said first original addresses of said sections stored in the first memory.

The invention is based on an integrated progressive volume loading approach, wherein image data sections, in particular slice images, loaded by two or more progressive iteration steps are already written to - i.e. "integrated" in - the second memory address of the full resolution data volume. Although in each of the progressive iteration steps only a set of spaced sections is loaded and stored in the second memory, the loaded sections are already stored at addresses in the second memory which correspond to the addresses of the loaded sections in the first memory. According to the integrated progressive volume loading method two or more sets of sections of the original image data stored in the first memory are progressively, i.e. step by step, loaded into the second memory, wherein after a first set of sections has been loaded into the second memory, a second set of sections is loaded into the second memory and so on. During the progressive loading, each of the loaded sections is stored at an address in the second memory which corresponds to its end address at a time when the full data image volume has been loaded and stored in the second memory.

By this means, a temporary and time consuming memory allocation is no longer required for each progressive volume loading step because the full resolution memory is allocated only once and used during all progressive steps. Moreover, already loaded slices of earlier steps do no longer have to be loaded and copied again in the volume of the next progressive step. Last but not least, because the slices of each progressive step are already integrated in the full resolution volume in the second memory, the requirement of keeping the previous volume in the second memory until the next progressive step is loaded into the second memory is no longer to be regarded. In sum, memory access and memory consumption is reduced significantly.

The invention is particularly advantageous in the field of rendering medical image data which were obtained from a patient by means of a medical imaging modality, e.g. computed tomography (CT).

Within the meaning of the present invention the term "section of the image data" relates to a part of the image data. A section of the image data has preferably a lower dimension than the image data. E.g., in the case of three-dimensional image data a section of the image data is a two-dimensional slice, in the case of two-dimensional image data, a section of the image data is a one-dimensional line, and in the case of four-dimensional image data comprising time-dependent spatial image data, a section of the image data can be a three-dimensional volume of the image data. Alternatively, a section of the image data can also have the same dimension as the image data and constitute a part thereof. E.g., in the in the case of three-dimensional image data a section of the image data is a three-dimensional part thereof.

Within the meaning of the present invention the term "set of sections of the image data" relates to two or more sections of the image data, said two or more sections being allocated to different addresses in the memory.

Within the meaning of the invention, the term "correspond" concerning original addresses in the first memory and end addresses in the second memory is not limited to a correspondence of physical memory addresses in the first and second memory but also relates to a correspondence of logical memory addresses in the first and second memory. Therefore, the term "correspond" also relates to a virtual correspondence of first and second memory addresses. Accordingly, the respective feature of the invention is be understood as said first logical and/or physical end addresses of said sections of said first set of sections stored in the second memory correspond to said first logical and/or physical original addresses of said sections of said first set of sections stored in the first memory. For example, in the case that the first memory is part of a server and the second memory is part of a client, the first memory addresses are given by logical addresses which differ from respective physical memory addresses in the first memory, whereas the second memory addresses are given by logical addresses which correlate with respective physical memory addresses in the second memory.

According to a preferred embodiment of the invention, said sections of the image data stored in the second memory are spaced from one another. By this means, a correspondence of memory addresses of the sections of the first set of sections in the first and second memory can be realized with high reliability.

In the sense of the present invention the term "spaced from one another" relating to sections of a set of sections of the image data stored in a memory means that image data of each of the sections of a set of sections is stored in the memory at different addresses, wherein between said addresses no image data relating to the same set of sections is stored. Regarding the first memory, between addresses of the sections of a first set image data of at least another set of sections is stored. Regarding the second memory, between addresses of the loaded sections of the first set the second memory is temporarily empty until at least one further set of sections has been loaded into the second memory.

Moreover, an end distance between said first end addresses of said sections stored in the second memory corresponds, i.e. is equal, to an original distance between said first original addresses of said sections stored in the first memory. In this way, the spacing between each of the sections of the set of sections in the first memory corresponds exactly to the spacing between respective sections of the set of sections stored in the second memory.

It is preferred that an end range of said sections stored in the second memory corresponds, i.e. is equal, to an original range of said sections stored in the first memory. In this way, the extent of the memory space relating to the sections of the set of sections in the first memory is identical with the extent of the memory space relating to respective sections of the set of sections stored in the second memory.

By means of one or more of the above-mentioned embodiments, a reduction of memory access and memory consumption during progressive loading is achieved in a very reliable manner.

According to another preferred embodiment of the invention, further sections of the image data stored in the first memory are loaded into the second memory, wherein said further sections of the image data being allocated to further original addresses in the first memory, wherein said further sections stored in the first memory are spaced from one another, and said further sections of the image data stored in said first memory are progressively loaded into the second memory and stored at further end addresses in the second memory, wherein said further end addresses of said further sections stored in the second memory correspond to said further original addresses of said further sections stored in the first memory.

Preferably, said further sections stored in the second memory are spaced from one another. Moreover, it is preferred that said further sections of the image data stored in the first memory are loaded into the second memory after said sections of the image data stored in the first memory have been stored in the second memory.

According to a further preferred embodiment, said first original addresses of said sections of the image data stored in the first memory alternate with said further original addresses of said further sections of the image data stored in the first memory.

According to another preferred embodiment, said first end addresses of said sections of the image data stored in the second memory alternate with said further end addresses of said further sections of the image data stored in the second memory.

The term "alternate" in the meaning of the invention relates to a sequence of the sections starting with a first section, followed by a first further section, followed by a second section, followed by a second further section, followed by a third section and so on.

By means of the above-mentioned preferred embodiments according to which first sections and at least one further section of the image data are progressively loaded, the memory access and memory consumption during loading is reduced considerably. Moreover, a fast and reliable display of preview images based on the loaded image data is enabled.

According to another preferred embodiment, said image data comprise n-dimensional image data and each of said sections of the image data loaded from the first memory into the second memory comprises (n-1)-dimensional image data (x-y), wherein n is equal to 2, 3 or 4. E.g., in the case of 3-dimensional image data said sections to be loaded into the second memory are constituted by 2-dimensional image data, so-called slice images. In this way, by progressively loading the sections of the image data into the second memory an iterative refinement of the loaded image data along a dimension of the original data is achieved so that, in addition to a significantly reduced memory access and memory consumption during loading, diagnostically conclusive preview images based on the loaded image data can be achieved.

Preferably, each of said sections of the image data loaded from the first memory into the second memory is virtually stretched in a dimension, e.g. a z direction, which is perpendicular to the n-1 dimensions, e.g. an x-y plane, of said sections of the image data loaded from the first memory into the second memory. E.g., 3-dimensional image data is rearranged in y direction so that the already loaded slices form one continuous block. This rearranging is performed virtually, just by modifying the volume array dimension and stretching the slices in z direction, but the actual volume data in second memory stays the same 1-dimensional array during each progressive refinement step. By this means, rendering algorithms which usually expect a full loaded volume can still be applied to the partially loaded volume, wherein the algorithms only need information about the increased slice thickness (z resolution). Therefore, apart from reduced memory access and consumption during loading, the generation of diagnostically conclusive preview images, in particular 3-dimensional images, is further improved.

Further advantages, features and examples of the present invention will be apparent from the following description of following figures:
- Fig. 1: shows an example of a system and an apparatus according to the invention;
- Fig. 2: shows a geometric representation of a first integrated progressive volume loading step;
- Fig. 3: shows a geometric representation of a second integrated progressive volume loading step;
- Fig. 4: shows a geometric representation of a third integrated progressive volume loading step; and
- Fig. 5: shows a diagrammatic representation of a memory space assignment of the first memory (a) and the second memory after a first (b), second (c) and third (d) progressive loading step.

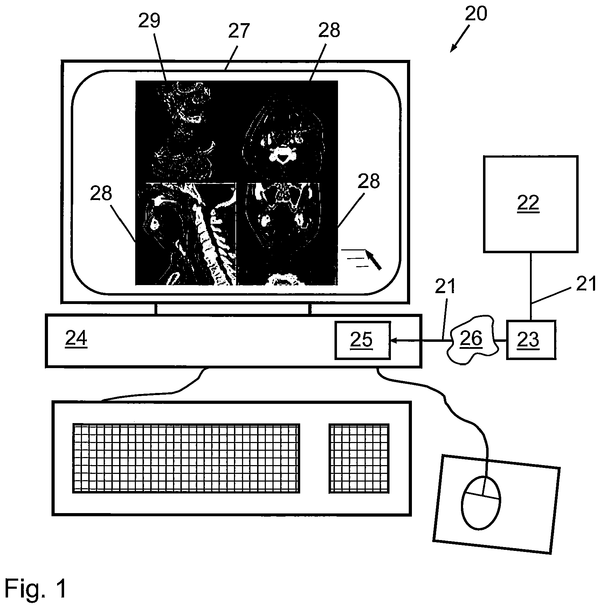

Fig. 1 shows an example of a system and an apparatus 20 according to the invention. A medical image data set 21 comprising a plurality of images, in particular slice images, of a human or animal body is acquired by a medical imaging apparatus 22, in particular a computer tomography (CT) apparatus, and is stored in a first memory 23. Upon request of a control unit 24, e.g. a computer, the image data set 21 or a part thereof is loaded from the first memory 23 into a second memory 25. The control unit 24 is configured to control and/or to execute an integrated progressive volume loading of the image data set 21 from the first memory 23 into the second memory 25 according to the invention.

Preferably, the second memory 25 is a part of the control unit 24. E.g., in the case that the control unit 24 is constituted by a workstation or a personal computer (PC), the second memory 25 can be constituted by a random access memory (RAM) or a hard disk component of the workstation or PC, respectively. Preferably, the control unit 24 is configured to generate a volume reconstruction 29 and/or slice views 28 of the image data set 21 on a display 27, e.g. a TFT screen. Preferably, in the control unit 24 a volume rendering algorithm for rendering 3-dimensional image data is implemented.

The image data set 21, in particular the plurality of slice images, or parts thereof can be directly fed to the control unit 24 and/or the second memory 25. Alternatively or additionally, the image data set 21 can be transferred via a data network 26 to which both the first memory 23 and the control unit 24 and/or the second memory 25 are, at least temporarily, connected. For example, the data network 26 can be a local area network (LAN) or wireless LAN (WLAN) in a hospital environment or the internet.

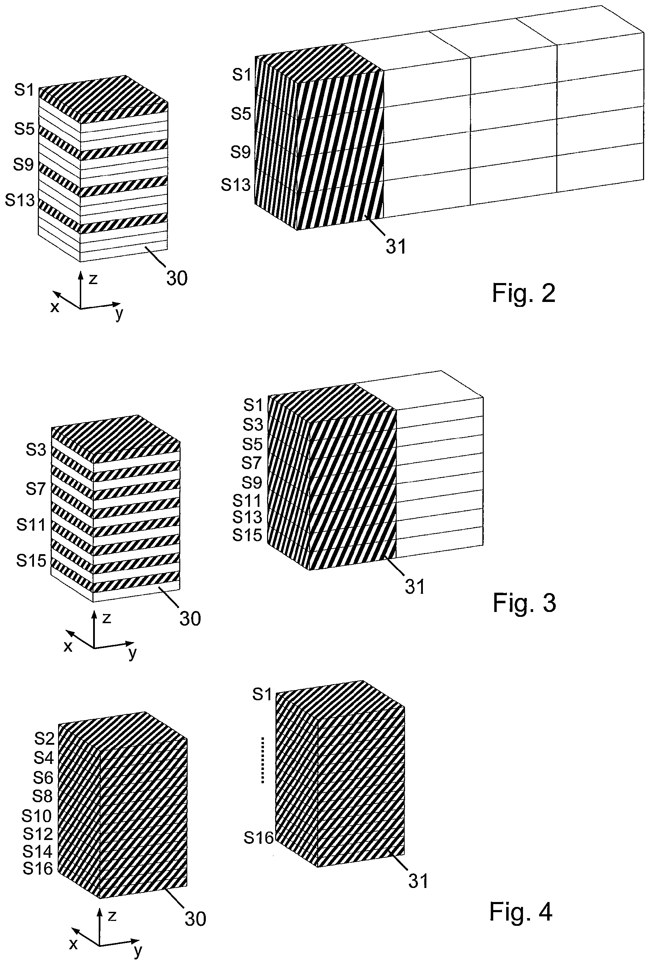

In the following, the integrated progressive volume loading of the image data set 21 from the first memory 23 into the second memory 25 is described in detail by reference to figures 2 to 5.

Fig. 2 shows a geometric illustration of a first integrated progressive volume loading step. In the present example, an original volume data set 30 comprising in total 16 CT slice images of a patient is stored in the first memory 23 (see fig. 1). Each of the slice images is schematically represented by a rectangular layer in the x-y plane and comprises a plurality of image data, in particular x-y position-dependent intensity values I(x, y, z), wherein z represents the position of the respective slice image, i.e. the layer in the x-y plane, in the z direction. Although in the present example only 16 slice images are shown for reasons of clarity, the total sum of slice images in real volume image data sets can be significantly higher than 16, but also lower than 16.

In the first integrated progressive volume loading step, image data of a first set of slice images denoted with S1, S5, S9 and S13 are progressively transferred from the first memory 23 to the second memory 25, wherein a 1^{st} (S1), 5^{th} (S5), 9^{th} (S9) and 13^{th} (S13) of the slice images is successively loaded into the second memory 25 so that in the second memory 25 an integrated progressive volume data set 31 is obtained. In the present example, a down sampling factor of 4 is applied when determining the slice images S1, S5, S9 and S13 to be transferred in the first loading step, so that only one out of four slice images is selected and transferred.

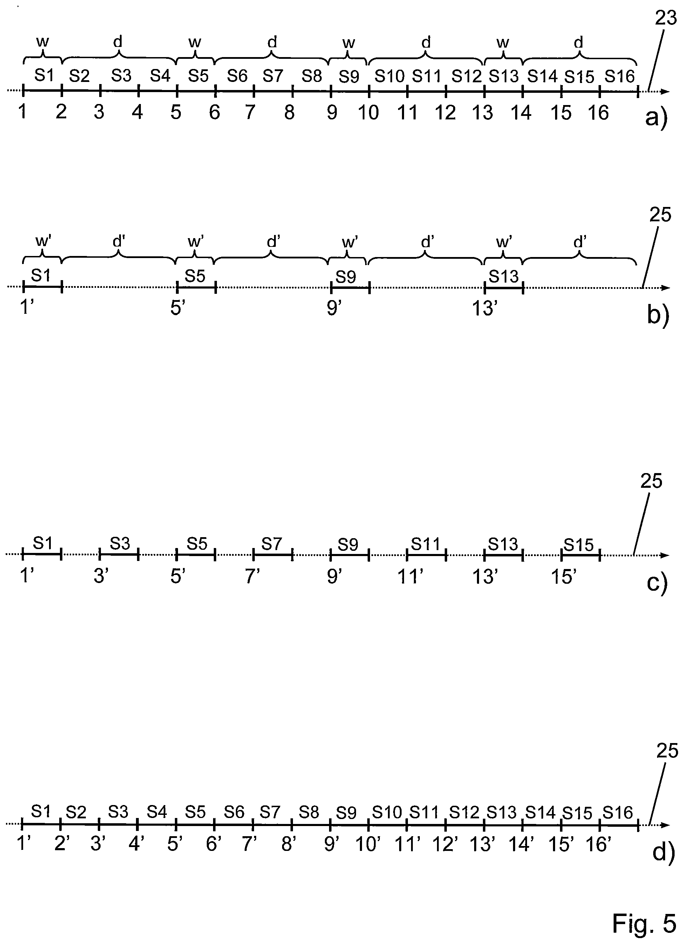

The slice images S1, S5, S9 and S13 of the first set of slice images in the original volume data set 30 are spaced from one another, i.e. there is at least one further slice image, e.g. S2, S3 and S4, between two, e.g. S1 and S5, of the slice images S1, S5, S9 and S13 of the first set of slice images. The image data of the slice images S1, S5, S9 and S13 of the first set of slice images are stored in the second memory 25 at memory addresses which correspond to memory addresses of the slice images S1, S5, S9 and S13 of the first set of slice images in the first memory 23. This is illustrated in the following by reference to figures 5a and 5b.

Fig. 5a shows a diagrammatic representation of a memory space assignment of the first memory 23. In the present diagram, a segment of the first memory 23, e.g. a linear data array, is represented by an arrow, wherein a position on the arrow represents a respective memory address in the first memory 23. Accordingly, fig. 5b shows a diagrammatic representation of a memory space assignment of the second memory 25, wherein a segment of the second memory 25, e.g. a linear data array, is represented by an arrow, a position on which representing a respective memory address in the second memory 25.

Image data of the slice images S1 to S16 are stored at different addresses 1 to 16 in the first memory 23. In the first integrated progressive volume loading step, not all of the slice images S1 to S16 are progressively loaded into the second memory 25, but only image data of a pre-defined first set of slice images S1, S5, S9 and S13. Moreover, the transferred slice images S1, S5, S9 and S13 of the first set are stored in the second memory 25 at addresses 1', 5', 9' and 13' which correspond to respective addresses 1, 5, 9, 13 of the slice images S1, S5, S9 and S13 of the first set stored in the first memory 23. In other words, the image data of slice images S1, S5, S9 and S13 of the first set are stored at memory addresses 1', 5', 9' and 13' in the second memory 25 which are identical to addresses the slice images S1, S5, S9 and S13 would have, if the full original volume data set 30 was stored in the second memory 25.

Accordingly, as illustrated in figures 5a and 5b, an original distance d between the addresses 1, 5, 9, 13 of the slice images S1, S5, S9 and S13 of the first set stored in the first memory 23 is preferably identical with an end distance d' between the addresses 1', 5', 9', 13' of the slice images S1, S5, S9 and S13 of the first set stored in the second memory 25. Further, an original range w of the slice images S1, S5, S9 and S13 of the first set stored in the first memory 23 is preferably identical with an end range w' of the slice images S1, S5, S9 and S13 of the first set stored in the second memory 25. Moreover, like in the first memory 23, the slice images S1, S5, S9 and S13 of the first set of slice images stored in the second memory 25 are spaced from one another, wherein there is free memory space for storing image data of at least one further slice image, e.g. S2, S3 and S4, between two, e.g. S1 and S5, of the slice images S1, S5, S9 and S13 of the first set of slice images stored in the second memory 25.

Preferably, in addition to the selective loading of a first set of slice images S1, S5, S9 and S13 into the second memory 25 set forth above, the integrated progressive volume data set 31 in the second memory 25 is rearranged in y direction so that the already loaded slice images S1, S5, S9 and S13 form one continuous block. This is illustrated in the right part of fig. 2 from which it is apparent that the thickness of the loaded slice images S1, S5, S9 and S13 (shaded) in z direction is stretched by a factor of 4 which corresponds to the down sampling factor of 4 mentioned above. Non-shaded layers adjacent to the shaded layers relating to the loaded slice images S1, S5, S9 and S13 represent (empty) placeholders for accordingly stretched non-loaded slice images.

Preferably, this rearranging is performed virtually, i.e. just by modifying the volume array dimension and stretching the loaded slice images S1, S5, S9 and S13 in z direction, whereas the actual volume data set 31 in the second memory 25 stays the same one-dimensional array (see fig. 5b) during each progressive refinement step. The advantage of virtually rearranging the volume data set 31 and stretching the slice images S1, S5, S9 and S13 in z direction is that rendering algorithms which expect a fully loaded volume data set can still be applied. Rendering algorithms only have to be provided with information regarding the virtually increased slice thickness or correspondingly lowered z resolution, respectively. Based on this information, the rendering algorithm, which is preferably executed by the control unit 24 (see fig. 1) of a computer, will treat the loaded image data of the first set of slice images S1, S5, S9 and S13 like a set of slice images having a resolution in z direction lowered by a factor 4.

Preferably, the rearranged volume can be rendered in the following ways: a) the volume rendering algorithm considers a slice image offset which corresponds to the sub sampling factor, i.e. the down sampling factor, and/or b) a clipping box is applied on the volume rendering algorithm, wherein only the already loaded slices are inside the clipping box.

Preferably, like in the first progressive loading step described in detail above, image data of further slice images are loaded from the first memory 23 into the second memory 25 in a second and a third progressive loading step which is illustrated by reference to figures 3, 4 and 5c and 5d in the following. Unless otherwise stated, the above elucidations relating to the first progressive loading step apply accordingly.

Fig. 3 shows a geometric illustration of a second integrated progressive volume loading step and in fig. 5c a diagrammatic representation of a memory space assignment of the second memory 25 after the second integrated progressive volume loading step is shown. As apparent from these figures, in the second loading step image data of a second set of slice images S3, S7, S11 and S15 are progressively loaded from the first memory 23 into the second memory 25. Like in the first loading step, the original memory addresses 3, 7, 11 and 15 of the slice images S3, S7, S11 and S15 of the second set in the first memory 23 correspond to the end memory addresses 3', 7', 11' and 15' of the slice images S3, S7, S11 of the second set loaded into the second memory 25. As a result of the second loading step following the first loading step, image data of the first and second set of slice images, i.e. slice images S1, S3, S5, S7, S9, S11, S13 and S15, are stored in the second memory 25. Accordingly, the down sampling factor after the first and second loading step corresponds to 2, i.e. one out of two slice images have been loaded into the second memory 25.

Like in the example given in the first loading step, the integrated progressive volume data set 31 in the second memory 25 is rearranged in y direction during or after the second loading step so that the already loaded slice images S1, S3, S5, S7, S9, S11, S13 and S15 form a continuous block (see right part of fig. 3), wherein the thickness of the loaded slice images S1, S3, S5, S7, S9, S11, S13 and S15 (shaded) in z direction is stretched by a factor of 2 which corresponds to the down sampling factor of 2. Non-shaded layers adjacent to the shaded layers relating to the loaded slice images S1, S3, S5, S7, S9, S11, S13 and S15 represent (empty) placeholders for accordingly stretched non-loaded slice images. This rearranging is also performed virtually by modifying the volume array dimension and stretching the loaded slice images S1, S3, S5, S7, S9, S11, S13 and S15 in z direction, whereas the actual volume data set 31 in the second memory 25 stays the same one-dimensional array (see fig. 5c) during each progressive refinement step.

Fig. 4 shows a geometric illustration of a third integrated progressive volume loading step and in fig. 5d a diagrammatic representation of a memory space assignment of the second memory 25 after the third integrated progressive volume loading step is shown. In the third loading step image data of a third set of slice images S2, S4, S6, S8, S10, S12, S14 and S16 are progressively loaded from the first memory 23 into the second memory 25. Like in the first and second loading step, the original memory addresses 2, 4, 6, 8, 10, 12, 14 and 16 of the slice images S2, S4, S6, S8, S10, S12, S14 and S16 of the third set in the first memory 23 correspond to the end memory addresses 2', 4', 6', 8', 10', 12', 14' and 16' of the slice images S2, S4, S6, S8, S10, S12, S14 and S16 of the third set loaded into the second memory 25. As a result of the third loading step following the first and second loading steps, image data of the first, second and third set of slice images, i.e. all of the slice images S1 to S16 of the full original volume data set 30, are stored in the second memory 25. Accordingly, the down sampling factor after the first, second and third loading step corresponds to 1, i.e. each of the slice images S1 to S16 of the original volume data set 30 has been loaded into the second memory 25. Accordingly, the rendering algorithm, which is preferably implemented in the control unit 24, is able to retrieve the fully loaded volume data set 31 in the second memory 25 so that a three-dimensional representation 29 (see fig. 1) of the original volume data set 30 can be achieved in full resolution both in x-y plane and z direction. Accordingly, after the third loading step no virtual rearrangement of the and stretching of the integrated progressive volume data set 31 in the second memory 25 is necessary.

The method of the integrated progressive volume loading illustrated above by means of three progressive loading steps can be expressed in general by means of pseudo code as follows:

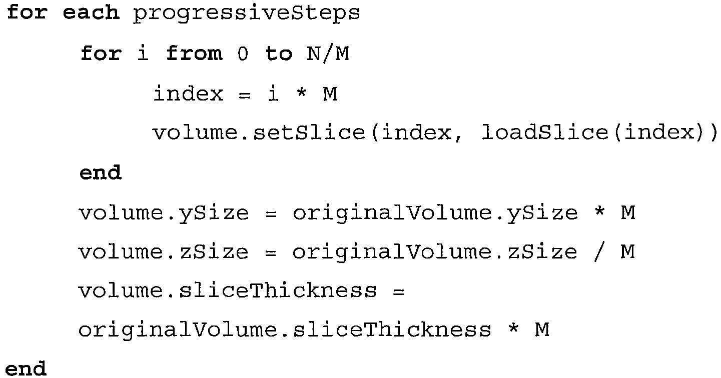

Wherein M corresponds to the sub sampling or down sampling factor and N corresponds to the total number of slices in the volume data set.

In the example of a first progressive loading step given above, each of the selected slice images S1, S5, S9 and S13 of the first set of slice images corresponds to a respective first slice image of four groups of slice images, wherein a first group comprises slice images S1 to S4, a second group comprises slice images S5 to S8, a third group comprises slice images S9 to S12 and a fourth group comprises slice images S13 to S16. It is, however, also possible to select other slice images for the first set of slice images. For example, instead of selecting a respective first slice image S1, S5, S9 and S13 of the four groups of slice images, it is possible to select a respective second slice image S2, S6, S10 and S14 of the four groups of slice images. It is also possible to select slice images of different order number in each of the four groups of slice images, e.g. S3, S6, S9 and S16.

Accordingly, the loaded slice images in the second and third progressive loading step can be different from the selected slice images of the second and third set of slice images given in the examples above.

In this case, the volume rendering algorithm is, preferably at each loading step, provided with information concerning the slice images, e.g. S3, S6, S9 and S16, which are to be or have already been loaded into the second memory. In this way, the volume rendering algorithm can treat the loaded image data of the first set of slice images, e.g. S3, S6, S9 and S16, like a set of slice images having a resolution in z direction lowered by a factor 4. Same applies for subsequently loaded further sets of slice images.

## Claims

1. Method for loading image data stored in a first memory (23) into a second memory (25) by loading sections (S1, S5, S9, S13) of the image data into the second memory (25), wherein
- said sections (S1, S5, S9, S13) of the image data are allocated to first original addresses (1, 5, 9, 13) in the first memory (23), wherein said sections (S1, S5, S9, S13) of the image data stored in the first memory (23) are spaced from one another, and
- said sections (S1, S5, S9, S13) of the image data stored in the first memory (23) are loaded into the second memory (25) and stored at first end addresses (1', 5', 9', 13') in the second memory (25),
**characterized in that**
said first end addresses (1', 5', 9', 13') of said sections (S1, S5, S9, S13) stored in the second memory (25) correspond to said first original addresses (1, 5, 9, 13) of said sections (S1, S5, S9, S13) stored in the first memory (23), wherein
- an end distance (d') between said first end addresses (1', 5', 9', 13') of said sections (S1, S5, S9, S13) stored in the second memory (25) is equal to the original distance (d) between said first original addresses (1, 5, 9, 13) of said sections (S1, S5, S9, S13) stored in the first memory (23) and
- there is free memory space in the second memory (25) for storing at least one further section (S3, S7, S11, S15) of the image data between two of said sections (S1, S5, S9, S13) stored in the second memory (25).

2. Method according claim 1, wherein further sections (S3, S7, S11, S15) of the image data stored in the first memory (23) are loaded into the second memory (25), wherein
- said further sections (S3, S7, S11, S15) of the image data being allocated to further original addresses (3, 7, 11, 15) in the first memory (23), wherein said further sections (S3, S7, S11, S15) stored in the first memory (23) are spaced from one another, and
- said further sections (S3, S7, S11, S15) of the image data stored in said first memory (23) are loaded into the second memory (25) and stored at further end addresses (3', 7', 11', 15') in the second memory (25), wherein said further end addresses (3', 7', 11', 15') of said further sections (S3, S7, S11, S15) stored in the second memory (25) correspond to said further original addresses (3, 7, 11, 15) of said further sections (S3, S7, S11, S15) stored in the first memory (23).

3. Method according to claim 2, wherein said further sections (S3, S7, S11, S15) of the image data stored in the first memory (23) are loaded into the second memory (25) after said sections (S1, S5, S9, S13) of the image data stored in the first memory (23) have been stored in the second memory (25).

4. Method according to claim 2 or 3, wherein said first original addresses (1, 5, 9, 13) of said sections (S1, S5, S9, S11) of the image data stored in the first memory (23) alternate with said further original addresses (3, 7, 11, 15) of said further sections (S3, S7, S11, S15) of the image data stored in the first memory (23).

5. Method according to one of the claims 2 to 4, wherein said first end addresses (1', 5', 9', 13') of said sections (S1, S5, S9, S13) of the image data stored in the second memory (25) alternate with said further end addresses (3', 7', 11', 15') of said further sections (S3, S7, S11, S15) of the image data stored in the second memory (25).

6. Method according to one of the preceding claims, wherein said image data comprise n-dimensional image data (I (x, y, z)), and each of said sections (S1, S5, S9, S13; S3, S7, S11, S15) of the image data loaded from the first memory (23) into the second memory (25) comprises (n-1)-dimensional image data (I (x, y)), wherein n is equal to 2, 3 or 4.

7. Method according claim 6, wherein each of said sections (S1, S5, S9, S13; S3, S7, S11, S15) of the image data loaded from the first memory (23) into the second memory (25) is virtually stretched in a dimension (z) which is perpendicular to the n-1 dimensions of said sections (S1, S5, S9, S13; S3, S7, S11, S15) of the image data loaded from the first memory (23) into the second memory (25), wherein the image data loaded into the second memory (25) is virtually rearranged such that the already loaded sections (S1, S5, S9, S13; S3, S7, S11, S15) form one continuous block.

8. Apparatus for loading image data stored in a first memory (23) into a second memory (25) comprising:
- a second memory (25) for storing image data,
- an image data rendering unit (24) for rendering image data stored in the second memory (25) and
- a control unit (24) for controlling and/or effecting loading sections (S1, S5, S9, S13) of image data stored in a first memory (23) into the second memory (25), wherein
- said sections (S1, S5, S9, S13) of the image data are allocated to first original addresses (1, 5, 9, 13) in the first memory (23), wherein said sections (S1, S5, S9, S13) of the image data stored in the first memory (23) are spaced from one another, and
- said sections (S1, S5, S9, S13) of the image data stored in the first memory (23) are loaded into the second memory (25) and stored at first end addresses (1', 5', 9', 13') in the second memory (25),
**characterized in that**
said first end addresses (1', 5', 9', 13') of said sections (S1, S5, S9, S13) stored in the second memory (25) correspond to said first original addresses (1, 5, 9, 13) of said sections (S1, S5, S9, S13) stored in the first memory (23), wherein
- an end distance (d') between said first end addresses (1', 5', 9', 13') of said sections (S1, S5, S9, S13) stored in the second memory (25) is equal to the original distance (d) between said first original addresses (1, 5, 9, 13) of said sections (S1, S5, S9, S13) stored in the first memory (23) and
- there is free memory space in the second memory (25) for storing at least one further section (S3, S7, S11, S15) of the image data between two of said sections (S1, S5, S9, S13) stored in the second memory (25).

9. System for loading image data stored in a first memory (23) into a second memory (25) comprising:
- a first memory (23) for storing image data and,
- the apparatus according to the preceding claim.

## Patentansprüche

1. Verfahren zum Laden von in einem ersten Speicher (23) gespeicherten Bilddaten in einen zweiten Speicher (25) durch Laden von Bereichen (S1, S5, S9, S13) der Bilddaten in den zweiten Speicher (25), wobei
- die Bereiche (S1, S5, S9, S13) der Bilddaten ersten Anfangsadressen (1, 5, 9, 13) im ersten Speicher (23) zugeordnet werden, wobei die Bereiche (S1, S5, S9, S13) der im ersten Speicher (23) gespeicherten Bilddaten voneinander getrennt sind, und
- die Bereiche (S1, S5, S9, S13) der im ersten Speicher (23) gespeicherten Bilddaten in den zweiten Speicher (25) geladen werden und an ersten Endadressen (1', 5', 9', 13') im zweiten Speicher (25) gespeichert werden,
**dadurch gekennzeichnet, dass**
die ersten Endadressen (1', 5', 9', 13') der im zweiten Speicher (25) gespeicherten Bereiche (S1, S5, S9, S13) den ersten Anfangsadressen (1, 5, 9, 13) der im ersten Speicher (23) gespeicherten Bereiche (S1, S5, S9, S13) entsprechen, wobei
- ein Endabstand (d') zwischen den ersten Endadressen (1', 5', 9', 13') der im zweiten Speicher (25) gespeicherten Bereiche (S1, S5, S9, S13) dem Anfangsabstand (d) zwischen den ersten Anfangsadressen (1, 5, 9, 13) der im ersten Speicher (23) gespeicherten Bereiche (S1, S5, S9, S13) gleich sind, und
- es im zweiten Speicher (25) freien Speicherplatz zum Speichern mindestens eines weiteren Bereichs (S3, S7, S11, S15) der Bilddaten zwischen zwei der im zweiten Speicher (25) gespeicherten Bereiche (S1, S5, S9, S13) gibt.

2. Verfahren nach Anspruch 1, wobei weitere Bereiche (S3, S7, S11, S15) der im ersten Speicher (23) gespeicherten Bilddaten in den zweiten Speicher (25) geladen werden, wobei
- die weiteren Bereiche (S3, S7, S11, S15) der Bilddaten weiteren Anfangsadressen weiteren Anfangsadressen (3, 7, 11, 15) im ersten Speicher (23) zugeordnet werden, wobei die weiteren, im ersten Speicher (23) gespeicherten Bereiche (S3, S7, S11, S15) voneinander getrennt sind, und
- die weiteren Bereiche (S3, S7, S11, S15) der im ersten Speicher (23) gespeicherten Bilddaten in den zweiten Speicher (25) geladen werden und an weiteren Endadressen (3', 7', 11', 15') im zweiten Speicher (25) gespeichert werden, wobei die weiteren Endadressen (3', 7', 11', 15') der im zweiten Speicher (25) gespeicherten weiteren Bereiche (S3, S7, S11, S15) den weiteren Anfangsadressen (3, 7, 11, 15) der weiteren, im ersten Speicher (23) gespeicherten Bereiche (S3, S7, S11, S15) entsprechen.

3. Verfahren nach Anspruch 2, wobei die weiteren Bereiche (S3, S7, S11, S15) der im ersten Speicher (23) gespeicherten Bilddaten in den zweiten Speicher (25) geladen werden, nachdem die Bereiche (S1, S5, S9, S13) der im ersten Speicher (23) gespeicherten Bilddaten im zweiten Speicher (25) gespeichert worden sind.

4. Verfahren nach Anspruch 2 oder 3, wobei sich die ersten Anfangsadressen (1, 5, 9, 13) der Bereiche (S1, S5, S9, S11) der im ersten Speicher (23) gespeicherten Bilddaten mit den weiteren Anfangsadressen (3, 7, 11, 15) der weiteren Bereiche (S3, S7, S11, S15) der im ersten Speicher (23) gespeicherten Bilddaten abwechseln.

5. Verfahren nach einem der Ansprüche 2 bis 4, wobei sich die ersten Endadressen (1', 5', 9', 13') der Bereiche (S1, S5, S9, S13) der im zweiten Speicher (25) gespeicherten Bilddaten mit den weiteren Endadressen (3', 7', 11', 15') der weiteren Bereiche (S3, S7, S11, S15) der im zweiten Speicher (25) gespeicherten Bilddaten abwechseln.

6. Verfahren nach einem der vorstehenden Ansprüche, wobei die Bilddaten n-dimensionale Bilddaten (I (x, y, z)) umfassen und jeder der Bereiche (S1, S5, S9, S13; S3, S7, S11, S15) der vom ersten Speicher (23) in den zweiten Speicher (25) geladenen Bilddaten (n-1)-dimensionale Bilddaten (I (x, y)) umfasst, wobei n gleich 2, 3 oder 4 ist.

7. Verfahren nach Anspruch 6, wobei jeder der Bereiche (S1, S5, S9, S13; S3, S7, S11, S15) der vom ersten Speicher (23) in den zweiten Speicher (25) geladenen Bilddaten in eine senkrecht zu den *n-1-*Dimensionen der Bereiche (S1, S5, S9, S13; S3, S7, S11, S15) der vom ersten Speicher (23) in den zweiten Speicher (25) geladenen Bilddaten verlaufende Dimension (z) virtuell gestreckt wird, wobei die in den zweiten Speicher (25) geladenen Bilddaten derart virtuell umgeordnet werden, dass die schon geladenen Bereiche (S1, S5, S9, S13; S3, S7, S11, S15) einen einzelnen ununterbrochenen Block bilden.

8. Apparat zum Laden von in einem ersten Speicher (23) gespeicherten Bilddaten in einen zweiten Speicher (25), umfassend:
- einen zweiten Speicher (25) zum Speichern von Bilddaten,
- eine Bilddaten-Wiedergabeeinheit (24) zur Wiedergabe von im zweiten Speicher (25) gespeicherten Bilddaten und
- eine Steuereinheit (24) zum Steuern und/oder zum Ausführen des Ladevorgangs von Bereichen (S1, S5, S9, S13) von in einem ersten Speicher (23) gespeicherten Bilddaten in den zweiten Speicher (25), wobei
- die Bereiche (S1, S5, S9, S13) der Bilddaten ersten Anfangsadressen (1, 5, 9, 13) im ersten Speicher (23) zugeordnet werden, wobei die Bereiche (S1, S5, S9, S13) der im ersten Speicher (23) gespeicherten Bilddaten voneinander getrennt sind, und
- die Bereiche (S1, S5, S9, S13) der im ersten Speicher (23) gespeicherten Bilddaten in den zweiten Speicher (25) geladen werden und an ersten Endadressen (1', 5', 9', 13') im zweiten Speicher (25) gespeichert werden,
**dadurch gekennzeichnet, dass**
die ersten Endadressen (1', 5', 9', 13') der im zweiten Speicher (25) gespeicherten Bereiche (S1, S5, S9, S13) den ersten Anfangsadressen (1, 5, 9, 13) der im ersten Speicher (23) gespeicherten Bereiche (S1, S5, S9, S13) entsprechen, wobei
- ein Endabstand (d') zwischen den ersten Endadressen (1', 5', 9', 13') der im zweiten Speicher (25) gespeicherten Bereiche (S1, S5, S9, S13) dem Anfangsabstand (d) zwischen den ersten Anfangsadressen (1, 5, 9, 13) der im ersten Speicher (23) gespeicherten Bereiche (S1, S5, S9, S13) gleich sind, und
- es im zweiten Speicher (25) freien Speicherplatz zum Speichern mindestens eines weiteren Bereichs (S3, S7, S11, S15) der Bilddaten zwischen zwei der im zweiten Speicher (25) gespeicherten Bereiche (S1, S5, S9, S13) gibt.

9. System zum Laden von in einem ersten Speicher (23) gespeicherten Bilddaten in einen zweiten Speicher (25), umfassend:
- einen ersten Speicher (23) zum Speichern von Bilddaten, und
- den Apparat nach dem vorstehenden Anspruch.

## Revendications

1. Procédé pour charger des données d'images stockées dans une première mémoire (23) dans une deuxième mémoire (25) en chargeant des sections (S1, S5, S9, S13) des données d'image dans la deuxième mémoire (25),
- lesdites sections (S1, S5, S9, S13) des données d'image étant assignées à des premières adresses initiales (1, 5, 9, 13) dans la première mémoire (23), lesdites sections (S1, S5, S9, S13) des données d'image stockées dans la première mémoire (23) étant séparées les unes des autres, et
- lesdites sections (S1, S5, S9, S13) des données d'image stockées dans la première mémoire (23) étant chargées dans la deuxième mémoire (25) et étant stockées à des premières adresses finales (1', 5', 9', 13') dans la deuxième mémoire (25),
**caractérisé en ce que**
lesdites premières adresses finales (1', 5', 9', 13') des sections (S1, S5, S9, S13) stockées dans la deuxième mémoire (25) correspondent aux premières adresses initiales (1, 5, 9, 13) des sections (S1, S5, S9, S13) stockées dans la première mémoire (23),
- une distance finale (d') entre les premières adresses finales (1', 5', 9', 13') des sections (S1, S5, S9, S13) stockées dans la deuxième mémoire (25) étant égale à la distance initiale (d) entre les premières adresses initiales (1, 5, 9, 13) des sections (S1, S5, S9, S13) stockées dans la première mémoire (23), et
- la deuxième mémoire (25) offrant de l'espace de mémoire libre pour le stockage d'au moins une section supplémentaire (S3, S7, S11, S15) des données d'image entre deux des sections (S1, S5, S9, S13) stockées dans la deuxième mémoire (25).

2. Procédé selon la revendication 1, **caractérisé en ce que** des sections supplémentaires (S3, S7, S11, S15) des données d'image stockées dans la première mémoire (23) sont chargées dans la deuxième mémoire (25),
- lesdites sections supplémentaires (S3, S7, S11, S15) des données d'image étant assignées à des adresses initiales supplémentaires (3, 7, 11, 15) dans la première mémoire (23), lesdites sections supplémentaires (S3, S7, S11, S15) stockées dans la première mémoire (23) étant séparées les unes des autres, et
- lesdites sections supplémentaires (S3, S7, S11, S15) des données d'image stockées dans la première mémoire (23) étant chargées dans la deuxième mémoire (25) et étant stockées à des adresses finales supplémentaires (3', 7', 11', 15') dans la deuxième mémoire (25), lesdites adresses finales supplémentaires (3', 7', 11', 15') des sections supplémentaires (S3, S7, S11, S15) stockées dans la deuxième mémoire (25) correspondant à des adresses initiales supplémentaires (3, 7, 11, 15) des sections supplémentaires (S3, S7, S11, S15) stockées dans la première mémoire (23).

3. Procédé selon la revendication 2, **caractérisé en ce que** lesdites sections supplémentaires (S3, S7, S11, S15) des données d'image stockées dans la première mémoire (23) sont chargées dans la deuxième mémoire (25) après que les sections (S1, S5, S9, S13) des données d'image stockées dans la première mémoire (23) ont été stockées dans la deuxième mémoire (25).

4. Procédé selon la revendication 2 ou 3, **caractérisé en ce que** lesdites premières adresses initiales (1, 5, 9, 13) des sections (S1, S5, S9, S11) des données d'image stockées dans la première mémoire (23) alternent avec les adresses initiales supplémentaires (3, 7, 11, 15) des sections supplémentaires (S3, S7, S11, S15) des données d'image stockées dans la première mémoire (23).

5. Procédé selon l'une quelconque des revendications 2 à 4, **caractérisé en ce que** lesdites premières adresses finales (1', 5', 9', 13') des sections (S1, S5, S9, S13) des données d'image stockées dans la deuxième mémoire (25) alternent avec les adresses finales supplémentaires (3', 7', 11', 15') des sections supplémentaires (S3, S7, S11, S15) des données d'image stockées dans la deuxième mémoire (25).

6. Procédé selon l'une quelconque des revendications précédentes, **caractérisé en ce que** les données d'image comprennent des données d'image *n*-dimensionnelles (I (x, y, z)) et que chacune des sections (S1, S5, S9, S13; S3, S7, S11, S15) des données d'image chargées de la première mémoire (23) dans la deuxième mémoire (25) comprend des données d'image (*n-1*)-dimensionnelles (I (x, y)), où n est égal à 2, 3 ou 4.

7. Procédé selon la revendication 6, **caractérisé en ce que** chacune des sections (S1, S5, S9, S13; S3, S7, S11, S15) des données d'image chargées de la première mémoire (23) dans la deuxième mémoire (25) sont virtuellement étirées dans une dimension (z) s'étendant perpendiculairement aux dimensions *n-1* des sections (S1, S5, S9, S13; S3, S7, S11, S15) des données d'image chargées de la première mémoire (23) dans la deuxième mémoire (25), lesdites données d'image chargées dans la deuxième mémoire (25) étant virtuellement réarrangées de façon à ce que les sections (S1, S5, S9, S13; S3, S7, S11, S15) déjà chargées forment un seul bloc continu.

8. Appareil pour charger des données d'images stockées dans une première mémoire (23) dans une deuxième mémoire (25), comprenant:
- une deuxième mémoire (25) servant au stockage de données d'image,
- une unité de visualisation de données d'image (24) servant à visualiser des données d'image stockées dans la deuxième mémoire (25) et
- une unité de contrôle (24) servant à contrôler et/ou effectuer le chargement de sections (S1, S5, S9, S13) de données d'images stockées dans une première mémoire (23) dans la deuxième mémoire (25),
- les sections (S1, S5, S9, S13) des données d'image étant assignées à des premières adresses initiales (1, 5, 9, 13) dans la première mémoire (23), lesdites sections (S1, S5, S9, S13) des données d'image stockées dans la première mémoire (23) étant séparées les unes des autres, et
- lesdites sections (S1, S5, S9, S13) des données d'image stockées dans la première mémoire (23) étant chargées dans la deuxième mémoire (25) et étant stockées à des premières adresses finales (1', 5', 9', 13') dans la deuxième mémoire (25),
**caractérisé en ce que**
lesdites premières adresses finales (1', 5', 9', 13') des sections (S1, S5, S9, S13) stockées dans la deuxième mémoire (25) correspondent aux premières adresses initiales (1, 5, 9, 13) des sections (S1, S5, S9, S13) stockées dans la première mémoire (23),
- une distance finale (d') entre les premières adresses finales (1', 5', 9', 13') des sections (S1, S5, S9, S13) stockées dans la deuxième mémoire (25) étant égale à la distance initiale (d) entre les premières adresses initiales (1, 5, 9, 13) des sections (S1, S5, S9, S13) stockées dans la première mémoire (23), et
- la deuxième mémoire (25) offrant de l'espace de mémoire libre pour le stockage d'au moins une section supplémentaire (S3, S7, S11, S15) des données d'image entre deux des sections (S1, S5, S9, S13) stockées dans la deuxième mémoire (25).

9. Système pour charger des données d'images stockées dans une première mémoire (23) dans une deuxième mémoire (25), comprenant:
- une première mémoire (23) servant au stockage de données d'image, et
- l'appareil selon la revendication précédente.
